# FASCICULE DE BREVET EUROPEEN

(11) **EP 3 004 615 B1**
(45) Date de publication et mention de la délivrance du brevet: **22.03.2017**
(21) Numéro de dépôt: 14728555.5
(22) Date de dépôt: 04.06.2014
(51) Int. Cl.: F02K 1/76, F16H 25/24

(54) **DISPOSITIF D'ACTIONNEMENT POUR DEPLACER UN CAPOT MOBILE D'UN INVERSEUR DE POUSSEE**
BETÄTIGUNGSVORRICHTUNG ZUM BEWEGEN EINER BEWEGLICHEN HAUBE EINER SCHUBUMKEHRVORRICHTUNG
ACTUATION DEVICE FOR MOVING A MOVABLE COWLING OF A THRUST-REVERSER

(30) Priorité: 04.06.2013 FR 1355114
(43) Date de publication de la demande: 13.04.2016
(73) Titulaire: Sagem Défense Sécurité, 92100 Boulogne-Billancourt (FR)
(72) Inventeur: ARNAUD, Daniel, F-92100 Boulogne-Billancourt (FR); CHARRIER, David, F-92100 Boulogne-Billancourt (FR); WERQUIN, Mickael, F-92100 Boulogne-Billancourt (FR); FADINI, Rinaldo, F-92100 Boulogne-Billancourt (FR); COUREUX, Sébastien, F-92100 Boulogne-Billancourt (FR)
(74) Mandataire: Regimbeau
(86) Numéro de dépôt international: PCT/EP2014/061621
(87) Numéro de publication internationale: WO 2014/195371

(56) Documents cités:
- WO-A1-2005/050062
- US-A1- 2004 206 066
- US-B2- 6 786 039

## Description

### DOMAINE DE L'INVENTION

L'invention concerne un dispositif d'actionnement pour déplacer un capot mobile d'un inverseur de poussée.

### ETAT DE LA TECHNIQUE

Les ensembles propulsifs ou PPS (Power Plant System) d'avion comprennent généralement une nacelle et un turboréacteur fixé à un pylône d'une aile ou à un fuselage de l'avion. Dans le cas d'un turboréacteur à double flux et à fort taux de dilution (turbofan), le turboréacteur inclut un générateur de gaz (corps haute pression ou CoHP), un corps basse pression (ou CoBP), une soufflante et des tuyères. La soufflante permet d'accélérer un flux d'air secondaire circulant dans une veine d'air de la soufflante, pour générer la poussée nécessaire à la propulsion de l'avion.

Les ensembles propulsifs des avions comprennent généralement un système d'inversion de poussée ou TR (« Thrust Reverse ») permettant d'inverser la poussée dans les phases d'atterrissage afin d'améliorer la capacité de freinage de l'avion. Un tel système comprend un ensemble de capots mobiles, actionnés par un ensemble d'actionneurs associés permettant d'obstruer temporairement la veine d'air et de dévier le flux d'air secondaire vers l'extérieur et vers l'avant de la nacelle, générant de ce fait une contre-poussée qui vient s'ajouter au freinage des roues.

Dans le cas d'un système d'inversion de poussée dit « à portes », la nacelle est équipée de capots mobiles (appelés « portes ») qui pivotent par rapport à la structure de la nacelle entre une position rétractée dans laquelle ils autorisent une circulation du flux d'air dans la veine d'air vers l'extérieur et vers l'arrière de la nacelle et une position déployée dans laquelle les volets obstruent la veine d'air et réorientent le flux d'air vers l'extérieur et vers l'avant de la nacelle.

Dans le cas d'un système d'inversion de poussée dit « à grilles » ou « en cascade », la nacelle est équipée de capots mobiles qui coulissent par rapport à la structure de la nacelle le long de rails entre une position rétractée dans laquelle ils autorisent une circulation du flux secondaire dans la veine d'air vers l'extérieur et vers l'arrière de la nacelle et une position déployée dans laquelle ils découvrent des grilles d'aubes de déviation disposées dans l'épaisseur de la nacelle et obstruent la veine d'air par l'intermédiaire de volets dont l'actionnement est lié au mouvement des capots.

De manière générale, dans l'un ou l'autre des cas, les capots mobiles sont actionnés par un ensemble d'actionneurs dédiés. Une synchronisation mécanique du mouvement des actionneurs est assurée par un système de synchronisation comprenant des arbres flexibles permettant de relier mécaniquement les actionneurs entre eux.

En outre, les systèmes d'inversion de poussée comprennent obligatoirement plusieurs dispositifs de verrouillage permettant d'empêcher un déploiement intempestif des capots en phase de vol. Parmi les dispositifs de verrouillage équipant les systèmes d'inversion de poussée, certains systèmes de verrouillage appelés « primaires » ou PLS (« Primary Lock System ») agissent sur l'arbre flexible pour bloquer l'arbre flexible en rotation.

Le document US 6,786,039 décrit un système d'actionnement d'un inverseur de poussée comprenant un actionneur entrainé en mouvement entre une configuration rétractée et une configuration déployée par le biais d'un arbre d'entrainement relié à un arbre flexible. Le système comprend un dispositif de verrouillage qui peut être commandé pour engager ou désengager l'arbre d'entrainement afin d'empêcher ou d'autoriser la rotation de l'arbre d'entrainement. Le système comprend en outre un inhibiteur de verrouillage permettant de maintenir le dispositif de verrouillage en position désengagée tant que l'actionneur n'est pas en configuration rétractée.

Un inconvénient du système proposé est que le dispositif de verrouillage est monté en porte à faux sur le carter du système, ce qui peut poser des problèmes de répartition des masses et d'encombrement.

De plus, le dispositif de verrouillage comprend une tige de verrouillage qui est déplacée par un électroaimant et qui peut être soumise à des efforts radiaux importants du fait du positionnement du dispositif de verrouillage par rapport à l'actionneur.

### RESUME DE L'INVENTION

Un but de l'invention est de proposer une alternative au système de l'état de la technique.

Ce but est atteint dans le cadre de la présente invention grâce à un dispositif d'actionnement pour déplacer un capot mobile d'un inverseur de poussée tel que défini dans la première revendication.

Le dispositif peut en outre présenter les caractéristiques suivantes :
- la bille est mobile en translation selon une direction radiale par rapport à un axe de rotation du premier élément,
- le dispositif inhibiteur de verrouillage comprend une pièce de guidage mobile entre une première position dans laquelle la pièce de guidage laisse la bille libre dans le logement, et une deuxième position dans laquelle la pièce de guidage sollicite la bille hors du logement vers la position d'inhibition,
- la pièce de guidage comprend un renfoncement dans lequel est reçue la bille lorsque la bille est en position escamotée,
- la pièce de guidage comprend une rampe de guidage propre à guider la bille vers la position d'inhibition lorsque la pièce de guidage est déplacée vers la deuxième position,
- la pièce de guidage est mobile en translation par rapport au premier élément parallèlement à un axe de rotation du premier élément,
- une tige mobile en translation par rapport au premier élément et propre à être sollicitée par le deuxième élément pour déplacer la pièce de guidage vers la première position,
- la tige mobile s'étend au moins en partie à l'intérieur du premier élément,
- le dispositif comprend un organe de rappel propre à solliciter la pièce de guidage vers la deuxième position,
- la pièce de verrouillage est mobile en translation par rapport au premier élément parallèlement à un axe de rotation du premier élément,
- le dispositif de verrouillage comprend un électroaimant qui lorsqu'il est alimenté, sollicite la pièce de verrouillage vers la position déverrouillée,
- le dispositif de verrouillage comprend un organe de rappel propre à solliciter la pièce de verrouillage vers la position verrouillée,
- la pièce de verrouillage comprend un renfoncement agencé de sorte que lorsque la pièce de verrouillage est en position déverrouillée, la bille vient en engagement avec le renfoncement pour empêcher un retour de la pièce de verrouillage en position verrouillée,
- le support et la pièce de verrouillage présentant chacune des cannelures, les cannelures du support et les cannelures de la pièce de verrouillage étant apte à coopérer entre elles pour guider la pièce de verrouillage en translation par rapport au support.

### PRESENTATION DES DESSINS

D'autres caractéristiques et avantages ressortiront encore de la description qui suit, laquelle est purement illustrative et non limitative, et doit être lue en regard des figures annexées parmi lesquelles :
- la figure 1, constituée des figures partielles 1A et 1B, représente de manière schématique, en vue en coupe longitudinale, un dispositif d'actionnement conforme à un mode de réalisation de l'invention,
- la figure 2 est une vue de détail du dispositif inhibiteur de verrouillage,
- la figure 3 est une vue de détail du dispositif de verrouillage,
- les figures 4A et 4B représentent de manière schématique le dispositif d'actionnement en configuration déverrouillée,
- les figures 5A et 5B représentent de manière schématique le dispositif d'actionnement en configuration verrouillée,
- la figure 6 est une vue de détail d'un dispositif de détection,
- la figure 7 illustre de manière schématique des dents des pièces de verrouillage.

### DESCRIPTION DETAILLEE D'UN MODE DE REALISATION

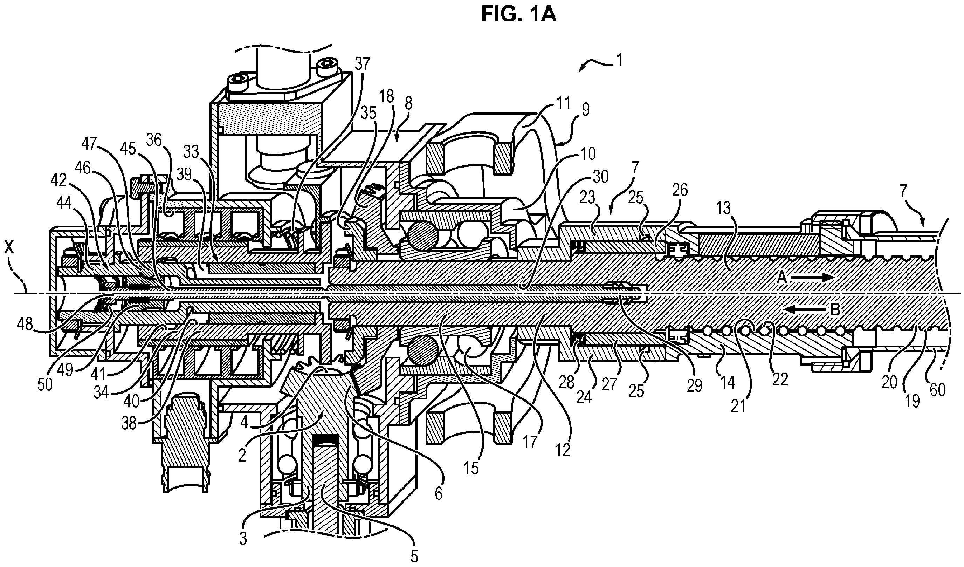

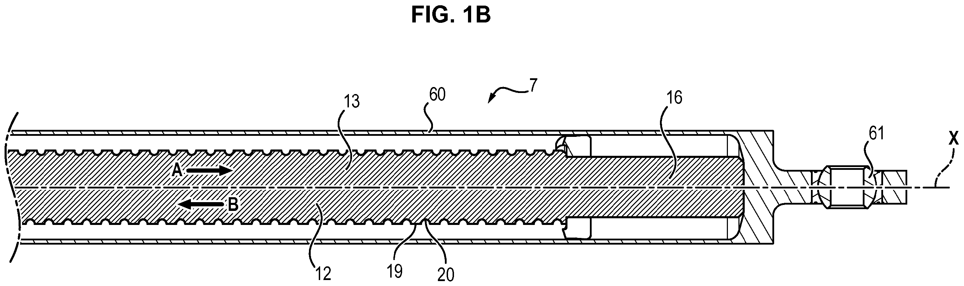

Sur la figure 1, le dispositif d'actionnement 1 représenté comprend un arbre d'entrainement 2 présentant une première extrémité 3 et une deuxième extrémité 4. La première extrémité 3 est conformée pour pouvoir être raccordée à un arbre moteur 5 d'un inverseur de poussée ou arbre flexible, l'arbre moteur 5 étant relié à un moteur d'entrainement du dispositif d'actionnement 1. La deuxième extrémité 4 comprend une partie d'engrenage 6.

Le dispositif d'actionnement 1 comprend également un actionneur 7 dont le déplacement est commandé par l'arbre d'entrainement 2.

Le dispositif d'actionnement 1 comprend également un carter 8 destiné à être monté sur une nacelle de l'avion. A cet effet, le dispositif d'actionnement 1 comprend un ensemble de cardan 9 comprenant une première pièce de cardan 10 fixée au carter 8, une deuxième pièce de cardan 11 montée rotative sur la première pièce de cardan 10 autour d'un premier axe de rotation. La deuxième pièce de cardan 11 est adaptée pour être montée rotative sur la nacelle autour d'un deuxième axe de rotation perpendiculaire au premier axe de rotation. Un tel ensemble de Cardan permet d'éviter l'apparition de contraintes qui seraient générées par un éventuel désalignement entre l'axe de déploiement de l'actionneur avec la direction de déplacement du capot mobile.

L'actionneur 7 comprend une vis 12 présentant un corps 13 de forme générale cylindrique allongée, et un écrou 14 s'étendant autour du corps 13 de la vis 12.

La vis 12 est montée rotative par rapport au carter 8 autour d'un axe de rotation X correspondant à l'axe longitudinal de la vis 12 et correspondant également à l'axe de déploiement de l'actionneur 7. La vis 12 comprend une première extrémité 15 (ou extrémité réceptrice) destinée à recevoir un couple d'entrainement et une deuxième extrémité 16 (ou extrémité libre). La vis 12 est montée rotative par rapport au carter 8 par le biais d'un roulement à billes 17 agencé entre la vis 12 et le carter 8.

L'actionneur 7 comprend par ailleurs un pignon conique 18 d'entrée monté solidaire de la vis 12, à la première extrémité 15 de la vis 12. Le pignon conique 18 d'entrée engrène avec la partie d'engrenage 6 de l'arbre d'entrainement 2, de manière à transmettre un mouvement de rotation de l'arbre d'entrainement 2 à la vis 12.

L'écrou 14 est destiné à être relié à un tube d'actionneur 60 présentant une extrémité reliée à un composant mobile de l'inverseur de poussée (un capot mobile par exemple) par le biais d'une liaison rotule.

L'écrou 14 est monté mobile en translation par rapport à la vis 12 selon l'axe longitudinal X de la vis 12 pour déplacer le tube d'actionneur entre deux positions extrêmes correspondant respectivement à une configuration rétractée et à une configuration déployée de l'actionneur 7.

A cet effet, le corps 13 de la vis 12 présente une surface externe cylindrique 19 dans laquelle est ménagée une gorge hélicoïdale 20. L'écrou 14 présente une surface interne cylindrique 21 dans laquelle est ménagée une gorge hélicoïdale 22. La vis 12 et l'écrou 14 coopèrent entre eux par le biais des gorges hélicoïdales 20 et 22 dans lesquelles sont logées des billes de sorte qu'une rotation de la vis 12 par rapport au carter 8 entraine une translation de l'écrou 14 par rapport à la vis 12 selon la direction X.

L'actionneur 7 comprend également une pièce de butée 23 solidaire de la vis 12. La pièce de butée 23 comprend une pièce cylindrique 24 s'étendant autour de la vis 12 et fixée à la vis 12 par des pions de fixation 25.

L'actionneur 7 comprend en outre un poussoir 26 monté mobile en translation par rapport à la vis 12. Le poussoir 26 s'étend entre la butée 23 et la vis 12. Le poussoir 26 comprend une bague cylindrique 27 s'étendant autour de la vis 12. La bague cylindrique 27 est positionnée de manière à être poussée par l'écrou 14 lorsque l'écrou 14 approche de la position extrême correspondant à une configuration rétractée de l'actionneur 7. Cela a pour effet de déplacer le poussoir 26 par rapport à la vis 12 vers la première extrémité 15 de la vis 12 (sens représenté par la flèche B).

L'actionneur 7 comprend un organe de rappel 28, tel qu'un ressort de compression par exemple, agencé entre la pièce de butée 23 et le poussoir 26. L'organe de rappel 28 est adapté pour solliciter le poussoir 26 en sens opposé (c'est-à-dire vers la deuxième extrémité 16 de la vis 12), ce qui a pour effet de déplacer le poussoir 26 vers la deuxième extrémité 16 de la vis 12 lorsque l'écrou 14 s'éloigne de la position extrême rétractée (sens représenté par la flèche A).

L'actionneur 7 comprend en outre une tige 29 de déblocage. La tige 29 de déblocage s'étend à l'intérieur d'un alésage 30 longitudinal de la vis 12. La tige 29 de déblocage est apte à coulisser par rapport à la vis 12 dans l'alésage longitudinal le long de l'axe X. La tige 29 de déblocage est montée solidaire du poussoir 26 par l'intermédiaire d'un pion 31 reliant la tige 29 de déblocage et le poussoir 26, dans une direction transversale par rapport à l'axe X. Le pion 31 est apte à coulisser dans une lumière radiale 32 ménagée dans le corps 13 de la vis 12.

Le dispositif d'actionnement 1 comprend également un dispositif de verrouillage 33 logé à l'intérieur du carter 8.

Le dispositif de verrouillage 33 comprend une première pièce de verrouillage 34 montée mobile en translation par rapport au carter 8 selon l'axe X (et donc par rapport à la vis 12) et une deuxième pièce de verrouillage 35 montée solidaire de la vis 12.

Le dispositif de verrouillage 33 comprend également une pièce de guidage 55 cylindrique. La pièce de guidage 55 est montée fixe par rapport à la première pièce de verrouillage 34 et présente des cannelures longitudinales, s'étendant parallèlement à l'axe X.

Le dispositif d'actionnement 1 comprend également une douille 43 montée solidaire du carter 8. La douille 43 présente également des cannelures longitudinales s'étendant parallèlement à l'axe X. La pièce de guidage 55 et la douille 43 coopèrent entre elles par le biais des cannelures recevant des billes de sorte à autoriser une translation de la première pièce de verrouillage 34 par rapport au carter 8 selon l'axe X, et à empêcher une rotation de la première pièce de verrouillage 34 autour de l'axe X.

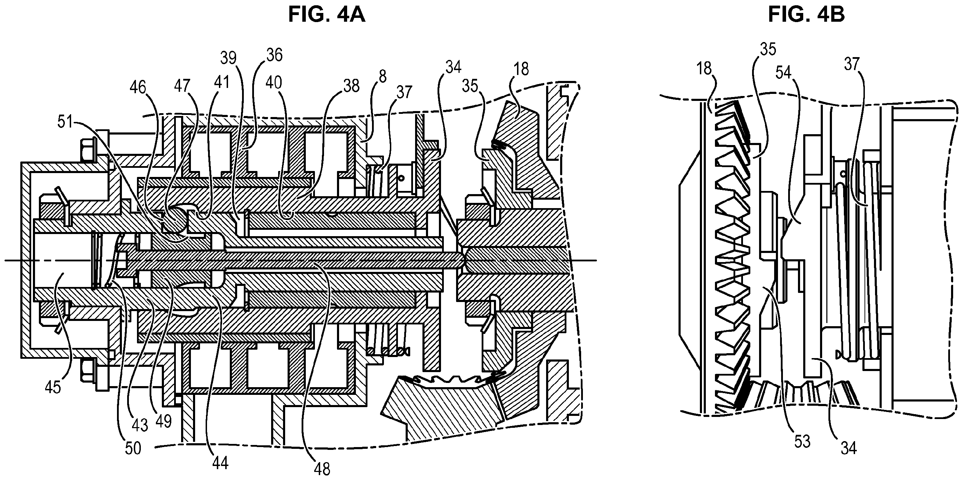

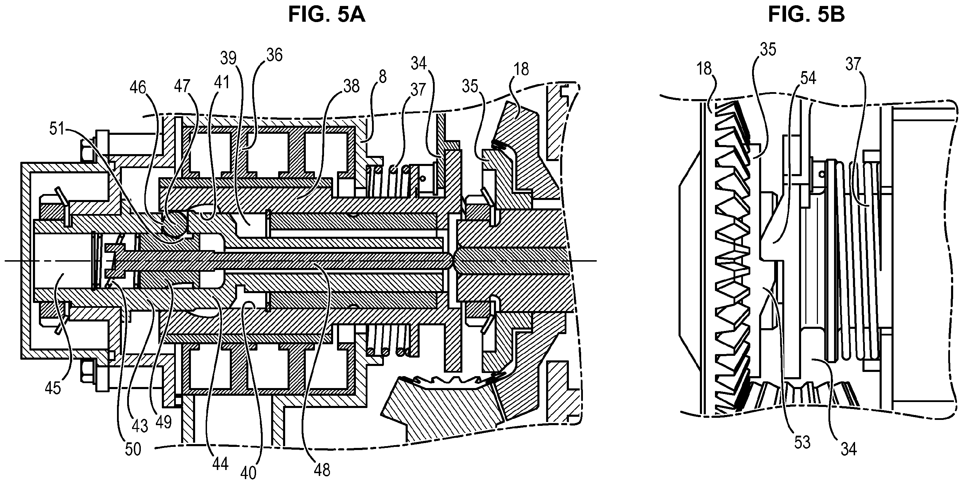

La première pièce de verrouillage 34 est mobile en translation par rapport à la deuxième pièce de verrouillage 35 entre une position verrouillée (illustrée sur la figure 5B) dans laquelle la première pièce de verrouillage 34 vient en prise avec la deuxième pièce de verrouillage 35, empêchant ainsi une rotation de la vis 12, et une position déverrouillée (illustrée sur la figure 4B) dans laquelle la première pièce de verrouillage 34 est désengagée de la deuxième pièce de verrouillage 35, autorisant ainsi une rotation de la vis 12.

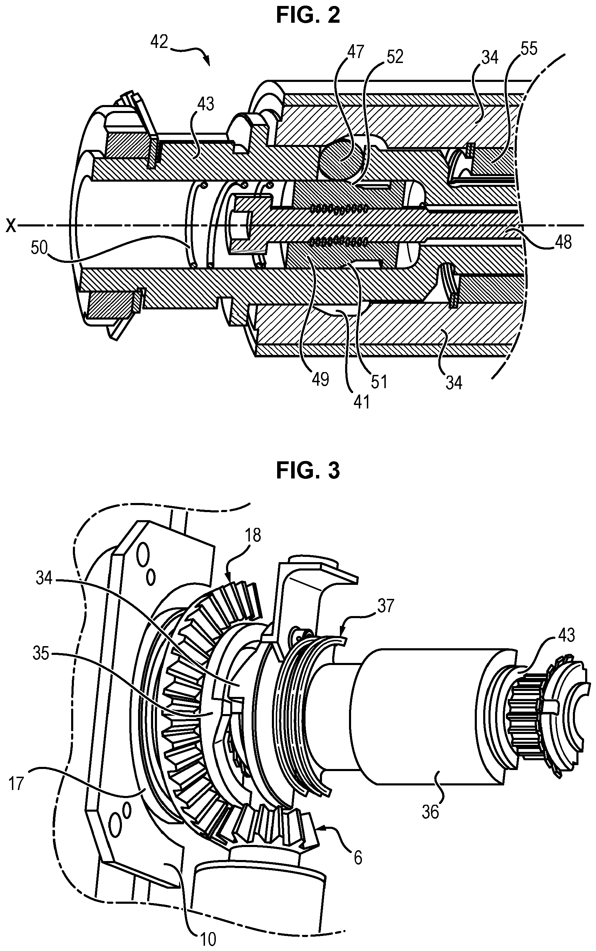

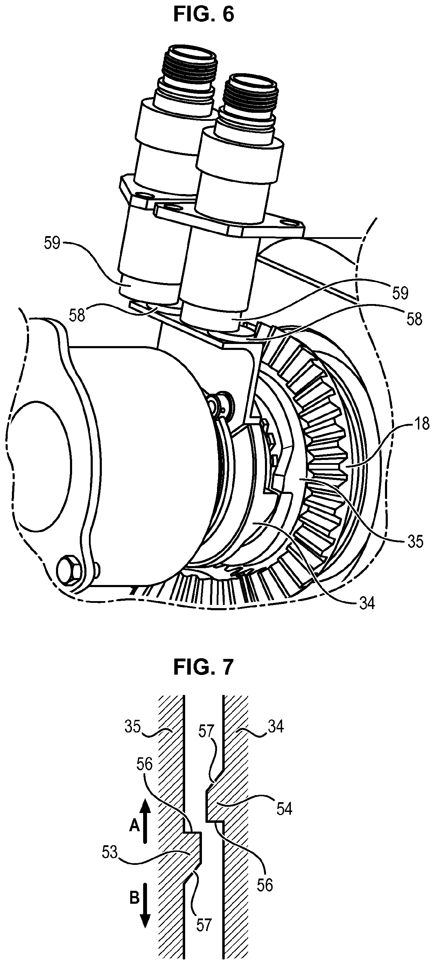

Plus précisément, comme cela est visible sur les figures 3 et 7, la première pièce de verrouillage 34 et la deuxième pièce de verrouillage 35 comprennent chacune des dents de verrouillage 53, 54. Les dents 53 de la première pièce de verrouillage 34 et les dents 54 de la deuxième pièce de verrouillage 35 présentent une forme asymétrique. Chaque dent 53, 54 comprend une face de blocage 56 s'étendant selon un plan passant par l'axe X, et une face de glissement 57 s'étendant dans un plan incliné par rapport à l'axe X. Lorsque la première pièce de verrouillage 34 est en position verrouillée, les dents 53, 54 empêchent une rotation de la vis 12 selon un premier sens (flèche A) correspondant au sens de déploiement de l'actionneur 7. En effet, les faces de blocage 56 des dents 53 de la deuxième pièce de verrouillage 34 viennent en butée contre les faces de blocage 56 des dents 54 de la première pièce de verrouillage 35. Toutefois, dans cette position, les dents 53, 54 autorisent une rotation de la vis 12 dans un deuxième sens (flèche B), opposé au premier sens (flèche A), correspondant au sens de rétraction de l'actionneur. En effet, les faces de glissement 57 des dents 54 de la deuxième pièce 35 peuvent glisser sur les faces de glissement 57 des dents 53 de la première pièce 34. Ainsi, en cas de panne du dispositif de verrouillage 33, il est possible de commander une rétraction de l'actionneur 7 malgré la position verrouillée de la première pièce de verrouillage 34.

Le dispositif de verrouillage 33 comprend un électroaimant 36 qui, lorsqu'il est alimenté en énergie électrique, sollicite la première pièce de verrouillage 34 vers la position déverrouillée.

Le dispositif de verrouillage 33 comprend également un organe de rappel 37 agencé pour solliciter la première pièce de verrouillage 34 vers la position verrouillé. L'organe de rappel 37 est un ressort hélicoïdal de compression s'étendant entre le carter 8 et la première pièce de verrouillage 34.

Comme cela est illustré sur la figure 2, la première pièce de verrouillage 34 comprend une paroi cylindrique 38 définissant une cavité interne 39. La paroi cylindrique 38 présente une surface interne 40 dans laquelle est ménagé un renfoncement annulaire 41.

Comme cela est illustré sur la figure 6, le dispositif de verrouillage 33 comprend également des cibles métalliques 58 montées solidaires de la première pièce de verrouillage 34, et des capteurs 59 montés sur le carter 8, chaque capteur 59 étant positionné en regard d'une cible métallique 58 associée. Chaque capteur 59 est apte à détecter une position de la cible métallique 58 située en regard par rapport au capteur 59. Les capteurs 59 sont aptes à générer des signaux représentatifs de l'état verrouillé ou déverrouillé du dispositif de verrouillage 33.

Le dispositif d'actionnement 1 comprend également un dispositif inhibiteur de verrouillage 42 logé à l'intérieur du carter 8.

Le dispositif inhibiteur de verrouillage 42 comprend une douille 43, montée solidaire du carter 8. La douille 43 comprend une paroi 44 présentant une forme générale cylindrique et définissant une cavité interne 45. La douille 43 comprend également un orifice 46 latéral traversant la paroi 44 et s'étendant selon une direction radiale par rapport à l'axe X.

Le dispositif inhibiteur de verrouillage 42 comprend en outre une bille 47 de forme générale sphérique reçue librement dans l'orifice 46. L'orifice 46 constitue ainsi un logement pour la bille 47. L'épaisseur de la paroi 44 est inférieure au diamètre de la bille 47, de sorte que la bille 47 s'étend toujours en partie à l'extérieur de l'orifice 46.

Le dispositif inhibiteur de verrouillage 42 comprend également un doigt d'actionnement 48 et un piston 49 s'étendant à l'intérieur de la douille 43 et commandé par le doigt d'actionnement 48. Le doigt d'actionnement 48 et le piston 49 sont montés coulissant dans la douille 43. Le piston 49 est montée solidaire du doigt d'actionnement 48. Ainsi, le doigt d'actionnement 48 et le piston 49 sont montés mobiles en translation par rapport à la douille 43 selon la direction de l'axe X entre une position de libération (illustrée sur les figures 5A et 5B) et une position de blocage (illustrée sur les figures 4A et 4B).

Le doigt d'actionnement 48 s'étend le long de l'axe X et est apte à être sollicité par la tige de déblocage 29 dans le deuxième sens (flèche B) lorsque l'écrou 14 approche de la position extrême rétractée.

Par ailleurs, le dispositif inhibiteur de verrouillage 42 comprend un organe de rappel 50 agencé pour solliciter le piston 49 dans le premier sens (flèche A), opposé au deuxième sens. L'organe de rappel 50 est un ressort hélicoïdal agencé entre le carter 8 et le piston 49.

Le piston 49 comprend un renfoncement 51 de réception de la bille 47 s'étendant sur la circonférence du piston 49. Lorsque la bille 47 est en position escamotée (position illustrée sur la figure 5A), le renfoncement 51 s'étend en regard de l'orifice 46 et est propre à recevoir une partie la bille 47 s'étendant en saillie de l'orifice 46 vers l'intérieur de la douille 43. Le renfoncement 51 comprend une surface inclinée 52 formant une rampe de guidage pour la bille 47. La surface inclinée 52 est agencée de sorte qu'une translation du piston 49 selon l'axe X vers la position bloquée a pour effet de pousser la bille 47 vers l'extérieur de la douille 43 dans une direction radiale par rapport à l'axe X. Le piston 49 permet ainsi de guider la bille 47 vers une position d'inhibition (position illustrée sur la figure 5B), dans laquelle la bille 47 fait saillie de l'orifice 46 à l'extérieur de la douille 43.

En fonctionnement, l'actionneur 7 est initialement en configuration rétractée et le dispositif de verrouillage 33 est verrouillé (figures 5A et 5B).

Dans cette configuration, l'écrou 14 est en butée contre la pièce de butée 23. Dans cette position extrême, l'écrou 14 sollicite le poussoir 26 vers la première extrémité 15 de la vis 12 (flèche B), ce qui a pour effet de comprimer l'organe de rappel 28 et de pousser la tige de déblocage 29 vers le piston 49. Le piston 49 est ainsi maintenu par la tige 29 en position désinhibée (position illustrée sur la figure 5A).

De plus, la première pièce de verrouillage 34 est en position verrouillée (position illustrée sur la figure 5B). Dans cette position, la première pièce de verrouillage 34 est en prise avec la deuxième pièce de verrouillage 35. Plus précisément, les dents 53 de la première pièce de verrouillage 34 sont positionnées en regard des dents 54 de la deuxième pièce de verrouillage 35 en étant intercalées avec les dents 54, ce qui empêche toute rotation de la vis 12.

Par conséquent, le dispositif de verrouillage 33 empêche tout mouvement de l'actionneur.

Comme l'actionneur 7 est verrouillé, un déploiement intempestif de l'inverseur de poussée n'est pas possible.

De plus, la bille 47 est en position escamotée dans le l'orifice 46 (position illustrée sur la figure 5A). La paroi 38 de la première pièce de verrouillage 34 empêche tout déplacement de la bille 47 hors de son logement vers la position d'inhibition. Dans cette position, la bille 47 autorise un déplacement de la première pièce de verrouillage 34 par rapport à la douille 43.

Lorsque que le pilote commande le déploiement de l'inverseur de poussée, un système de contrôle déclenche l'alimentation de l'électroaimant 36, ce qui a pour effet de déplacer la première pièce de verrouillage 34 de la position verrouillée (figures 5A et 5B) vers la position déverrouillée (figure 4A et 4B).

Une fois la première pièce de verrouillage 34 en position déverrouillée (position illustrée sur les figures 4A et 4B), la première pièce de verrouillage 34 est désengagée d'avec la deuxième pièce de verrouillage 35. Plus précisément, les dents 53 de la première pièce de verrouillage 34 ne sont plus intercalées avec les dents 54 de la deuxième pièce de verrouillage 35, ce qui autorise une rotation de la vis 12.

De plus, lorsque la première pièce de verrouillage 34 est en position déverrouillée, le renfoncement 41 de la première pièce de verrouillage 34 est positionné en regard de l'orifice 46 dans lequel est reçue la bille 47.

Au cours du déploiement de l'actionneur, l'arbre d'entrainement 2 est entrainé en rotation dans un premier sens par le moteur d'entrainement du dispositif d'actionnement par l'intermédiaire de l'arbre moteur 5. L'arbre d'entrainement 2 entraine en rotation la vis 12 par l'intermédiaire de la partie d'engrenage 6 et du pignon conique d'entrée 18. La rotation de la vis 12 par rapport à l'écrou 14 entraine une translation de l'écrou 14 par rapport à la vis 12 le long de l'axe X, dans le sens de déploiement de l'actionneur (flèche A).

Comme l'écrou 14 n'est plus en butée contre la pièce de butée 23, l'écrou 14 libère le poussoir 26. L'organe de rappel 28 sollicite le poussoir 26 vers la deuxième extrémité 16 de la vis 12, ce qui a pour effet d'éloigner la tige de déblocage 29 du piston 49.

Comme le piston 49 n'est plus sollicité par la tige 29, l'organe de rappel 50 ramène le piston 49 vers la position bloquée. Le piston 49 se translate par rapport à la douille 43 parallèlement à l'axe X, de sorte que le piston 49 pousse la bille 47 à l'intérieur de l'orifice 46 vers l'extérieur de la douille 43. Lorsque le piston 49 est en position bloquée, la bille 47 fait saillie hors de l'orifice 46 et vient s'engager dans le renfoncement 41 de la première pièce de verrouillage 34, ce qui a pour effet d'interdire une translation de la première pièce de verrouillage 34 par rapport à la douille 43. Dans cette position (position d'inhibition), la bille 47 empêche un retour de la première pièce de verrouillage 34 vers la position verrouillée.

Ainsi, le dispositif inhibiteur de verrouillage 42 empêche un verrouillage de l'actionneur 7 tant que l'inverseur de poussée n'est pas complètement rétracté.

Lorsque que le pilote commande la rétraction de l'inverseur de poussée, l'arbre d'entrainement 2 est entrainé en rotation dans un deuxième sens, opposé au premier sens, par le moteur d'entrainement du dispositif d'actionnement par l'intermédiaire de l'arbre moteur 5. L'arbre d'entrainement 2 entraine en rotation la vis 12 par l'intermédiaire de la partie d'engrenage 6 et du pignon conique d'entrée 18. La rotation de la vis 12 par rapport à l'écrou 14 entraine une translation de l'écrou 14 par rapport à la vis 12 le long de l'axe X, dans le sens de rétraction de l'actionneur (flèche B).

Lorsque l'actionneur 7 est presque complètement rétracté, l'écrou 14 vient solliciter le poussoir 26 vers la première extrémité 15 de la vis 12, ce qui a pour effet de comprimer l'organe de rappel 28 et de pousser la tige de déblocage 29 vers le piston 49.

La tige de déblocage 29 sollicite alors le piston 49 vers la position de libération.

Le piston 49 se translate par rapport à la douille 43 parallèlement à l'axe X, de sorte que le renfoncement 51 du piston 49 vient se positionner en regard de l'orifice 46. Dans cette position, le piston 49 ne maintient plus la bille 47 dans la position d'inhibition. La bille 47 se trouve alors libre de revenir en position escamotée.

Sous l'action de l'organe de rappel 37, la première pièce de verrouillage 34 sollicite la bille 47 radialement vers l'intérieur de la douille 43, ce qui provoque un déplacement de la bille 47 à l'intérieur de l'orifice 46 vers la position escamotée. La bille 47 libère le passage de la première pièce de verrouillage 34 et autorise un retour de la première pièce de verrouillage 34 vers la position verrouillée.

L'organe de rappel 37 provoque un déplacement automatique de la première pièce de verrouillage 34 en position verrouillée. Le verrouillage de l'actionneur 7 est ainsi réalisé sans nécessiter une alimentation en énergie électrique.

Une fois que l'écrou 14 est en butée contre la pièce de butée 23, l'actionneur 7 est totalement rétracté.

Une fois que l'actionneur 7 est verrouillé par le dispositif de verrouillage 33, le déploiement de l'actionneur 7 n'est plus possible, sans avoir au préalable commandé le déverrouillage du dispositif de verrouillage 33.

Le dispositif d'actionnement 1 qui vient d'être décrit présente l'avantage de pouvoir être facilement intégré au niveau de la tête d'un actionneur préexistant car le dispositif de verrouillage peut s'interfacer avec un arbre d'entrainement 2 standard.

### REFERENCES NUMERIQUES

- 1: Dispositif d'actionnement
- 2: Arbre d'entrainement
- 3: Première extrémité de l'arbre d'entrainement
- 4: Deuxième extrémité de l'arbre d'entrainement
- 5: Arbre moteur de l'inverseur de poussée
- 6: Partie d'engrenage de l'arbre d'entrainement
- 7: Actionneur
- 8: Carter
- 9: Ensemble de Cardan
- 10: Première pièce de Cardan
- 11: Deuxième pièce de Cardan
- 12: Vis de l'actionneur
- 13: Corps de la vis
- 14: Ecrou de l'actionneur
- 15: Première extrémité de la vis (extrémité réceptrice)
- 16: Deuxième extrémité de la vis (extrémité libre)
- 17: Roulement à billes
- 18: Pignon conique d'entrée
- 19: Surface externe cylindrique
- 20: Gorge hélicoïdale
- 21: Surface interne cylindrique
- 22: Gorge hélicoïdale
- 23: Pièce de butée
- 24: Pièce cylindrique
- 25: Pions de fixation
- 26: Poussoir
- 27: Bague cylindrique
- 28: Organe de rappel associé au poussoir
- 29: Tige de déblocage
- 30: Alésage longitudinal de la vis
- 31: Pion
- 32: Lumière radiale
- 33: Dispositif de verrouillage
- 34: Première pièce de verrouillage
- 35: Deuxième pièce de verrouillage
- 36: Electroaimant
- 37: Organe de rappel associé à la première pièce de verrouillage
- 38: Paroi cylindrique de la première pièce de verrouillage
- 39: Cavité interne de la première pièce de verrouillage
- 40: Surface interne de la paroi cylindrique
- 41: Renfoncement annulaire
- 42: Dispositif inhibiteur de verrouillage
- 43: Douille
- 44: Paroi de la douille
- 45: Cavité interne de la douille
- 46: Orifice latéral
- 47: Bille
- 48: Doigt d'actionnement
- 49: Piston
- 50: Organe de rappel associé au piston
- 51: Renfoncement du piston
- 52: Surface inclinée du renfoncement
- 53: Dents de la première pièce de verrouillage
- 54: Dents de la deuxième pièce de verrouillage
- 55: Pièce de guidage
- 56: Face de blocage d'une dent
- 57: Face de glissement d'une dent
- 58: Cibles métalliques
- 59: Capteurs
- 60: Tube d'actionneur
- 61: Liaison rotule

## Revendications

1. Dispositif d'actionnement (1) pour déplacer un capot mobile d'un inverseur de poussée, comprenant :
- un carter (8),
- un actionneur (7) comprenant un premier élément (12) et un deuxième élément (14) monté mobile en translation par rapport au premier élément (12), l'un du premier élément et du deuxième élément étant une vis, et l'autre étant un écrou propre à coopérer avec la vis, de sorte qu'une rotation du premier élément (12) par rapport au deuxième élément (14) entraine une translation du deuxième élément (14) par rapport au premier élément (12),
- un dispositif de verrouillage (33) comprenant une pièce de verrouillage (34) mobile entre une position verrouillée dans laquelle la pièce de verrouillage (34) empêche la rotation du premier élément (12), et une position déverrouillée dans laquelle la pièce de verrouillage (34) autorise la rotation du premier élément (12), et
**caractérisé en ce qu'**il comprend:
- un dispositif inhibiteur de verrouillage (42) comprenant un support (43) monté fixe par rapport au carter (8), un logement (46) ménagé dans le support (43) et une bille (47) mobile dans le logement entre une position escamotée dans laquelle la bille (47) autorise un déplacement de la pièce de verrouillage (34) entre la position verrouillée et la position déverrouillée, et une position d'inhibition dans laquelle la bille (47) fait saillie hors du logement (47) pour empêcher un retour de la pièce de verrouillage (34) en position verrouillée.

2. Dispositif selon la revendication 1, dans lequel la bille (47) est mobile en translation selon une direction radiale par rapport à un axe de rotation du premier élément (12).

3. Dispositif selon l'une des revendications 1 ou 2, dans lequel le dispositif inhibiteur de verrouillage (42) comprend une pièce de guidage (49) mobile entre une première position dans laquelle la pièce de guidage laisse la bille (47) libre dans le logement (47), et une deuxième position dans laquelle la pièce de guidage (49) sollicite la bille (47) hors du logement vers la position d'inhibition.

4. Dispositif selon la revendication 3, dans lequel la pièce de guidage (49) comprend un renfoncement (51) dans lequel est reçue la bille (47) lorsque la bille (47) est en position escamotée.

5. Dispositif selon l'une des revendications 3 ou 4, dans lequel la pièce de guidage (49) comprend une rampe de guidage (52) propre à guider la bille (47) vers la position d'inhibition lorsque la pièce de guidage (49) est déplacée vers la deuxième position.

6. Dispositif selon l'une des revendications 3 à 5, dans lequel la pièce de guidage (49) est mobile en translation par rapport au premier élément (12) parallèlement à un axe de rotation du premier élément (12).

7. Dispositif selon l'une des revendications 3 à 6, comprenant une tige (29) mobile en translation par rapport au premier élément (12) et propre à être sollicitée par le deuxième élément (14) pour déplacer la pièce de guidage (49) vers la première position.

8. Dispositif selon la revendication 7, dans lequel la tige mobile (29) s'étend au moins en partie à l'intérieur du premier élément (12).

9. Dispositif selon l'une des revendications 2 à 8, comprenant un organe de rappel (50) propre à solliciter la pièce de guidage (49) vers la deuxième position.

10. Dispositif selon l'une des revendications 1 à 9, dans lequel la pièce de verrouillage (34) est mobile en translation par rapport au premier élément (12) parallèlement à un axe de rotation du premier élément (12).

11. Dispositif selon l'une des revendications 1 à 10, dans lequel le dispositif de verrouillage (1) comprend un électroaimant (36) qui lorsqu'il est alimenté, sollicite la pièce de verrouillage vers la position déverrouillée.

12. Dispositif selon l'une des revendications 1 à 11, dans lequel le dispositif de verrouillage (33) comprend un organe de rappel (37) propre à solliciter la pièce de verrouillage (34) vers la position verrouillée.

13. Dispositif selon l'une des revendications 1 à 12, dans lequel la pièce de verrouillage (34) comprend un renfoncement (41) agencé de sorte que lorsque la pièce de verrouillage (34) est en position déverrouillée, la bille (47) vient en engagement avec le renfoncement (41) pour empêcher un retour de la pièce de verrouillage (34) en position verrouillée.

14. Dispositif selon l'une des revendications 1 à 14, dans lequel le support (43) et la pièce de verrouillage (34) présentant chacune des cannelures, les cannelures du support (43) et les cannelures de la pièce de verrouillage (34) étant apte à coopérer entre elles pour guider la pièce de verrouillage (34) en translation par rapport au support (43).

## Patentansprüche

1. Betätigungsvorrichtung (1) für die Bewegung einer mobilen Haube eines Schubumkehrers, die folgendes umfasst:
- ein Gehäuse (8),
- ein Betätigungselement (7), das ein erstes Element (12) und ein zweites Element (14) umfasst, das translatorisch beweglich relativ zum ersten Element (12) montiert ist, wobei eines des ersten Elements und des zweiten Elements eine Schraube ist, und das andere eine Mutter, die dafür geeignet ist, mit der Schraube zusammen zu wirken, so dass eine Drehung des ersten Elements (12) relativ zum zweiten Element (14) eine Translation des zweiten Elements (14) relativ zum ersten Element (12) mit sich führt,
- eine Sperrvorrichtung (33), die ein Sperrteil (34) umfasst, das beweglich zwischen einer Sperrposition, in der das Sperrteil (34) die Drehung des ersten Elements (12) verhindert, und einer entriegelten Position, in der das Sperrteil (34) die Drehung des ersten Elements (12) zulässt, und
**dadurch gekennzeichnet ist, dass** sie folgendes umfasst:
- eine Verriegelungs-Hemmvorrichtung (42), die einen Träger (43) umfasst, der ortsfest relativ zum Gehäuse (8) befestigt ist, eine Aufnahme (46), die im Träger (43) ausgebildet ist, und eine Kugel (47), die in der Aufnahme zwischen einer versenkten Position, in der die Kugel (47) eine Verschiebung des Sperrteils (34) zwischen der gesperrten Position und der entriegelten Position zulässt, mobil ist, und einer Hemmposition, in der die Kugel (47) aus der Aufnahme (47) herausragt, um eine Rückkehr des Sperrteils (34) in die gesperrte Position zu verhindern.

2. Vorrichtung nach Anspruch 1, in der die Kugel (47) in Translation in einer radialen Richtung gegenüber einer Drehachse des ersten Elements (12) beweglich ist.

3. Vorrichtung nach einem der vorstehenden Ansprüche 1 oder 2, in der die Verriegelungs-Hemmvorrichtung (42) ein Führungsteil (49) umfasst, das zwischen einer ersten Position, in der das Führungsteil die Kugel (47) frei in der Aufnahme (47) lässt, und einer zweiten Position, in der das Führungsteil (49) die Kugel (47) aus der Aufnahme zur Hemmposition bringt, beweglich ist.

4. Vorrichtung nach Anspruch 3, in der das Führungsteil (49) eine Vertiefung (51) umfasst, in der die Kugel (47) aufgenommen wird, wenn die Kugel (47) in versenkter Position ist.

5. Vorrichtung nach einem der vorstehenden Ansprüche 3 oder 4, in der das Führungsteil (49) eine Führungsrampe (52) umfasst, die geeignet ist, die Kugel (47) zur Hemmposition zu führen, wenn das Führungsteil (49) zur zweiten Position verschoben ist.

6. Vorrichtung nach einem der vorstehenden Ansprüche 3 bis 5, in der das Führungsteil (49) relativ zum ersten Element (12) translatorisch parallel zu einer Drehachse des ersten Elements (12) beweglich ist.

7. Vorrichtung nach einem der vorstehenden Ansprüche 3 bis 6, die eine Stange (29) umfasst, die translatorisch relativ zum ersten Element (12) beweglich und geeignet ist, vom zweiten Element (14) angesprochen zu werden, um das Führungsteil (49) zur ersten Position zu verschieben.

8. Vorrichtung nach Anspruch 7, in der sich die bewegliche Stange (29) zumindest teilweise im Innern des ersten Elements (12) erstreckt.

9. Vorrichtung nach einem der vorstehenden Ansprüche 2 bis 8, die ein Rückstellorgan (50) umfasst, das geeignet ist, das Führungsteil (49) zur zweiten Position zu bringen.

10. Vorrichtung nach einem der vorstehenden Ansprüche 1 bis 9, in der das Sperrteil (34) relativ zum ersten Element (12) translatorisch parallel zu einer Drehachse des ersten Elements (12) beweglich ist.

11. Vorrichtung nach einem der vorstehenden Ansprüche 1 bis 10, in der die Sperrvorrichtung (1) einen Elektromagneten (36) umfasst, der, wenn er gespeist wird, das Sperrelement zur entriegelten Position anspricht.

12. Vorrichtung nach einem der vorstehenden Ansprüche 1 bis 11, in der die Sperrvorrichtung (33) ein Rückstellorgan (37) umfasst, das geeignet ist, das Sperrteil (34) zur gesperrten Position zu bringen.

13. Vorrichtung nach einem der vorstehenden Ansprüche 1 bis 12, in der das Sperrteil (34) eine Vertiefung (41) umfasst, die so gestaltet ist, dass, wenn das Sperrteil (34) in entriegelter Position ist, die Kugel (47) in die Vertiefung (41) eingreift, um eine Rückkehr des Sperrteils (34) in Sperrposition zu verhindern.

14. Vorrichtung nach einem der vorstehenden Ansprüche 1 bis 13, in der der Träger (43) und das Sperrteil (34) jeweils Rillen aufweisen, wobei die Rillen des Trägers (43) und die Rillen des Sperrteils (34) geeignet sind, zusammen zu wirken, um das Sperrteil (34) in Translation gegenüber dem Träger (43) zu führen.

## Claims

1. An actuating device (1) for moving a movable cowl of a thrust reverser, comprising:
- a casing (8),
- an actuator (7) comprising a first element (12) and a second element (14) mounted movable in translation relative to the first element (12), one of the first element and the second element being a screw, and the other being a nut suitable for cooperating with the screw, so that a rotation of the first element (12) relative to the second element (14) causes a translation of the second element (14) relative to the first element (12),
- a locking device (33) comprising a locking part (34) movable between a locked position in which the locking part (34) prevents the rotation of the first element (12), and an unlocked position in which the locking part (34) allows the rotation of the first element (12), and
**characterized in that** it comprises:
- a lock inhibitor device (42) comprising a support (43) fixedly mounted relative to the casing (8), a housing (46) formed in the support (43) and a ball (47) movable in the housing between a stowed position in which the ball (47) allows a motion of the locking part (34) between the locked position and the unlocked position, and an inhibiting position in which the ball (47) protrudes out of the housing (47) to prevent the return of the locking part (34) to the locked position.

2. The device according to claim 1, wherein the ball (47) is movable in translation along a radial direction relative to an axis of rotation of the first element (12).

3. The device according to one of claims 1 or 2, wherein the lock inhibitor device (42) comprises a guide part (49) movable between a first position in which the guide part leaves the ball (47) free in the housing (47), and a second position in which the guide part (49) urges the ball (47) out of the housing toward the inhibiting position.

4. The device according to claim 3, wherein the guide part (49) comprises a recess (51) in which the ball (47) is received when the ball (47) is in the stowed position.

5. The device according to one of claims 3 or 4, wherein the guide part (49) comprises a guide track (52) suitable for guiding the ball (47) toward the inhibiting position when the guide part (49) is moved toward the second position.

6. The device according to one of claims 3 to 5, wherein the guide part (49) is movable in translation relative to the first element (12) parallel to an axis of rotation of the first element (12).

7. The device according to one of claims 3 to 6, comprising a rod (29) that is movable in translation relative to the first element (12) and suitable for being urged by the second element (14) to move the guide part (49) toward the first position.

8. The device according to claim 7, wherein the movable rod (29) extends at least in part inside the first element (12).

9. The device according to one of claims 2 to 8, comprising a return member (50) suitable for urging the guide part (49) toward the second position.

10. The device according to one of claims 1 to 9, wherein the locking part (34) is movable in translation relative to the first element (12) parallel to an axis of rotation of the first element (12).

11. The device according to one of claims 1 to 10, wherein the locking device (1) comprises an electromagnet (36) which, when powered, urges the locking part toward the unlocked position.

12. The device according to one of claims 1 to 11, wherein the locking device (33) comprises a return member (37) suitable for urging the locking part (34) toward the locked position.

13. The device according to one of claims 1 to 12, wherein the locking part (34) comprises a recess (41) arranged so that when the locking part (34) is in the unlocked position, the ball (47) engages with the recess (41) to prevent the return of the locking part (34) to the locked position.

14. The device according to one of claims 1 to 13, wherein the support (43) and the locking part (34) each have grooves, the grooves of the support (43) and the grooves of the locking part (34) being able to cooperate with one another to guide the locking part (34) in translation relative to the support (43).
